# EUROPEAN PATENT SPECIFICATION

(11) **EP 4 456 409 B1**
(45) Date of publication and mention of the grant of the patent: **07.10.2026**
(21) Application number: 22910690.1
(22) Date of filing: 17.11.2022
(51) Int. Cl.: H02P 6/28

(54) **MOTOR DRIVE CONTROL DEVICE**
MOTORANTRIEBSSTEUERVORRICHTUNG
DISPOSITIF DE COMMANDE D'ENTRAÎNEMENT DE MOTEUR

(30) Priority: 24.12.2021 JP 2021210267
(43) Date of publication of application: 30.10.2024
(73) Proprietor: Minebea Mitsumi Inc., Kitasaku-gun, Nagano 3890293 (JP)
(72) Inventor: ARAKAWA, Yohei, Kitasaku-gun, Nagano 389-0293 (JP); HASEGAWA, Yasuyuki, Kitasaku-gun, Nagano 389-0293 (JP)
(74) Representative: Dennemeyer & Associates S.A.
(86) International application number: PCT/JP2022/042739
(87) International publication number: WO 2023/119971

(56) References cited:
- JP-A- 2010 025 889
- JP-A- 2010 110 067
- JP-A- 2021 158 848
- JP-A- 2021 158 848
- JP-A- 2021 166 425
- US-A1- 2019 379 389

## Description

### Technical Field

The present invention relates to a motor drive control device.

### Background Art

Typically, a motor drive control device for driving a motor, such as a hybrid stepping motor, using pulse width modulation (PWM) controls the motor to operate with an appropriate torque by measuring a current flowing through a coil of the motor and adjusting a duty ratio of a PWM signal as a drive control signal for the motor based on a measurement value of the current.

As a method of measuring the current flowing through the coil of the motor, for example, there is known a technique as disclosed in Patent Document 1. In the technique, a current detection resistor is connected to a low side of an inverter circuit (H-bridge circuit) for driving the motor and a current flowing through the current detection resistor is measured.

Patent Document 2, which discloses features of the preamble of claim 1, it further discloses a closed loop control for current-driven loads and includes a pulse-width modulation mode path configured to pre-drive an output stage in a first operation mode, and a linear mode path to pre-drive the output stage in a second mode of operation. The Document discloses a multi-mode current driver comprising a combiner, a PWM pre-driver, a linear pre-driver and a current monitor.

Patent Document 3 discloses motor control device that controls a three-phase motor. The motor includes calculation means for performing a weighted calculation based on a detected current flowing through coils of the motor.

### Citation List

### Patent Literature

Patent Document 1: JP 2018-182942 A
Patent Document 2: US 2019/379389 A1
Patent Document 3: JP 2021 158848 A

### Summary of Invention

### Technical Problem

However, in a conventional current measurement method represented by Patent Document 1, since a current is detected by one resistor connected in series to an inverter circuit as a motor drive circuit, the current of the coil cannot be appropriately detected due to a switching noise or the like when a switch included in the inverter circuit is driven, and detection accuracy may decrease.

The present invention has been made to solve the problem described above, and an object of the present invention is to enable high accuracy measurement of a current of a coil of a motor.

### Solution to Problem

A motor drive control device according to a representative embodiment of the present invention as defined in claim 1 includes: a control circuit configured to generate, based on a measurement value of a current flowing through a coil of a motor, a drive control signal for driving the coil; and a drive circuit configured to drive the coil based on the drive control signal generated by the control circuit. The drive circuit includes a first switch and a second switch connected in series, a third switch and a fourth switch connected in series, a first current detection element connected in series to the first switch and the second switch, and a second current detection element connected in series to the third switch and the fourth switch. The coil is connected between a first node with the first switch and the second switch connected in common, and a second node with the third switch and the fourth switch connected in common. The control circuit measures the current flowing through the coil, based on a mean value of a current flowing through the first current detection element and a current flowing through the second current detection element.

### Advantageous Effects of Invention

According to an aspect of the present invention, it is possible to measure a current of a coil of a motor with high accuracy.

### Brief Description of Drawings

FIG. 1 is a diagram illustrating a configuration of a motor unit including a motor drive control device according to a first embodiment.
FIG. 2 is a diagram illustrating an internal configuration of a drive circuit and a control circuit in the motor drive control device according to the first embodiment.
FIG. 3 is a diagram illustrating an example of an internal configuration of a current acquisition unit according to the first embodiment.
FIG. 4 is a diagram for describing a measurement timing of a current of a coil by the current acquisition unit according to the first embodiment.
FIG. 5A is a diagram illustrating an example of an energization pattern of the coil.
FIG. 5B is a diagram illustrating an example of an energization pattern of the coil.
FIG. 6 is a diagram illustrating an internal configuration of a drive circuit and a control circuit in a motor drive control device according to a second embodiment.
FIG. 7 is a diagram illustrating an example of an internal configuration of a current acquisition unit according to the second embodiment.
FIG. 8 is a diagram for describing a measurement timing of a current of a coil by the current acquisition unit according to the second embodiment.

### Description of Embodiments

Hereinafter, specific examples of embodiments of the present invention will be described with reference to the drawings. In the following description, the components common to the embodiments are denoted by the same reference signs, and the repeated descriptions are omitted.

### First Embodiment

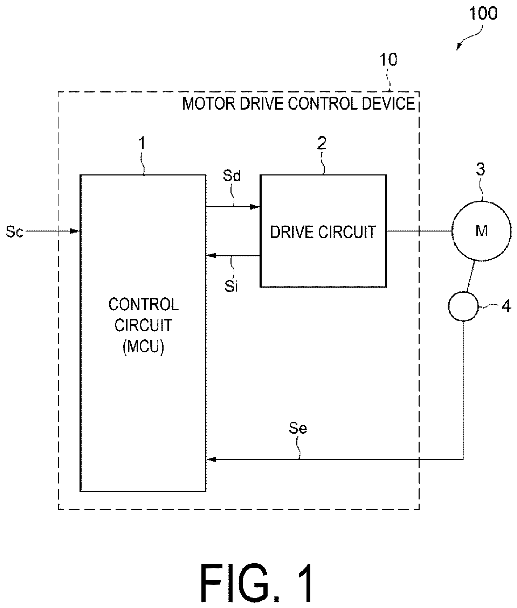

FIG. 1 is a diagram illustrating a configuration of a motor unit 100 including a motor drive control device 10 according to a first embodiment.

As illustrated in FIG. 1, the motor unit 100 includes a motor 3, a rotation position detector 4 for detecting a rotation position of the motor 3, and the motor drive control device 10 controlling the rotation of the motor 3. The motor unit 100 can be applied to, for example, various devices using a motor as a drive source such as a fan.

The motor 3 is, for example, a stepping motor including coils of two phases (A phase and B phase).

The rotation position detector 4 is a device for detecting a rotation position of a rotor of the motor 3. The rotation position detector 4 is, for example, an encoder. The rotation position detector 4 outputs a rotation position detection signal Se corresponding to a rotation position of the rotor of the motor 3. The rotation position detector 4 is not limited to an encoder, and may be a Hall element or the like.

For example, the motor drive control device 10 periodically supplies a drive current to the coil of each phase of the motor 3 to rotate the rotor (permanent magnets) of the motor 3. Specifically, the motor drive control device 10 includes a control circuit 1 and a drive circuit 2.

Note that FIG. 1 illustrates only part of all the constituent elements of the motor drive control device 10, and the motor drive control device 10 may include other constituent elements in addition to those illustrated in FIG. 1.

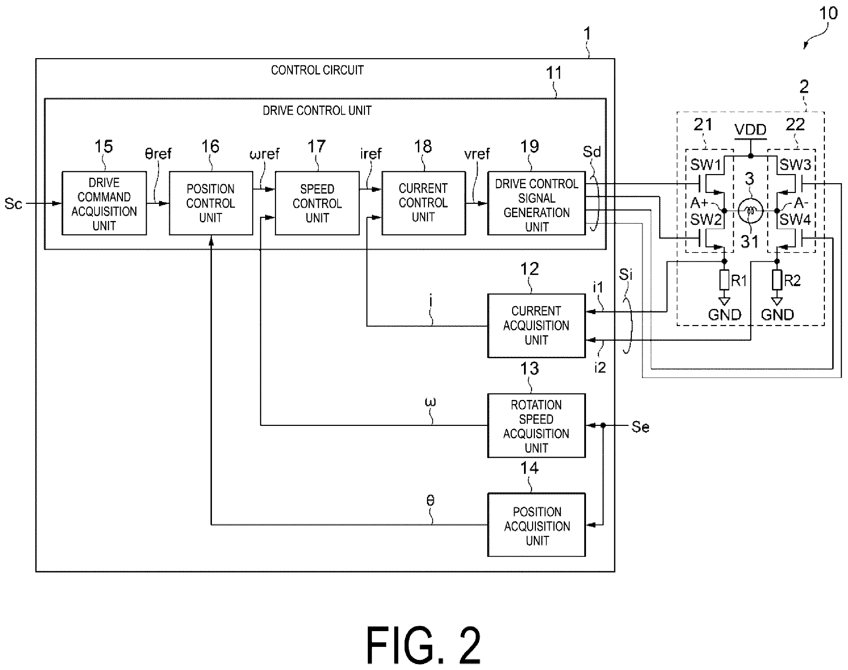

FIG. 2 is a diagram illustrating an internal configuration of the drive circuit 2 and the control circuit 1 in the motor drive control device 10 according to the first embodiment.

The drive circuit 2 is disposed between a DC power supply VDD and a ground potential GND and drives a coil 31 of the motor 3 as a load based on an input drive control signal Sd.

Note that, in FIG. 2, only the drive circuit 2 for driving the A-phase coil 31 out of the A-phase and B-phase coils 31 in the motor 3 is illustrated, and the drive circuit 2 for driving the B-phase coil 31, functional blocks, and the like are not illustrated.

As illustrated in FIG. 2, the drive circuit 2 is an inverter circuit and, for example, an H-bridge circuit. Specifically, the H-bridge circuit as the drive circuit 2 includes two switching legs 21 and 22 and two current detection elements R1 and R2 connected in series to the switching legs 21 and 22, respectively.

More specifically, the drive circuit 2 includes a switch SW1 and a switch SW2 connected in series, a switch SW3 and a switch SW4 connected in series, the current detection element R1, and the current detection element R2. The switch SW1 and the switch SW2 constitute one switching leg 21. The switch SW3 and the switch SW4 constitute the other switching leg 22. The current detection element R1 is connected in series to the switch SW1 and the switch SW2. The current detection element R2 is connected in series to the switch SW3 and the switch SW4.

The switches SW1 to SW4 are, for example, transistors. Note that, although the types of the transistors are not particularly limited, the switches SW1 to SW4 are, for example, metal-oxide-semiconductor field-effect transistors (MOSFETs).

The coil 31 of each phase of the motor 3 is connected between neutral points of the switching legs 21 and 22 of the drive circuit 2. Specifically, as illustrated in FIG. 2, the coil 31 of the motor 3 is connected between a node A+ with the switch SW1 and the switch SW2 connected in common and a node A- with the switch SW3 and the switch SW4 connected in common.

Here, the "node A+" is a node connected to a terminal of the coil 31 at the upstream side of a current when the current flows through the A-phase coil 31. On the other hand, the "node A-" is a node connected to a terminal of the coil 31 at the downstream side of a current when the current flows through the A-phase coil 31.

In the present embodiment, for example, a case where a current flows from a terminal of the coil 31 at the left side in FIG. 2 to a terminal of the coil 31 at the right side in FIG. 2 is mainly described, and thus, for convenience of description, a node with the switch SW1 and the switch SW2 connected in common is denoted as "node A+", and a node with the switch SW3 and the switch SW4 connected in common is denoted as "node A-".

In the drive circuit 2, the two switches SW1 and SW2 (SW3 and SW4) connected in series alternately perform ON/OFF operations (switching operations) in response to the input drive control signal Sd, whereby the coil 31 as a load is driven.

When the switch SW1 and the switch SW2 connected in series switch between ON and OFF, a dead time may be provided. During the dead time, both of the switch SW1 and the switch SW2 are turned off. Similarly, a dead time may be provided for the switch SW3 and the switch SW4.

The drive control signal Sd is a signal for controlling driving of the motor 3. For example, the drive control signal Sd is a pulse width modulation (PWM) signal, and includes four types of signals for separately driving the switches SW1 to SW4. An energization pattern of the coil 31 is switched by the switching between an ON state and an OFF state of each of the switches SW1 to SW4 based on the drive control signal Sd.

The current detection elements R1 and R2 are elements for detecting a current flowing through the coil 31 of the motor 3 and are, for example, resistors. The current detection element R1 is connected in series to the switches SW1 and SW2 between the DC power supply VDD and the ground potential GND. The current detection element R2 is connected in series to the switches SW3 and SW4 between the DC power supply VDD and the ground potential GND. For example, the current detection element R1 is connected between the switch SW2 at a low side of the switching leg 21 and the ground potential GND. The current detection element R2 is connected between the switch SW4 at a low side of the switching leg 22 and the ground potential GND.

Currents i1 and i2 flowing through the current detection elements R1 and R2 are converted into voltages by the current detection elements R1 and R2 and are input to the control circuit 1 as a current detection signal Si.

The control circuit 1 generates the drive control signal Sd based on a measurement value of a current i flowing through the coil 31 of the motor 3 to control the driving of the motor 3. Specifically, the control circuit 1 generates the drive control signal Sd based on, for example, a drive command signal Sc designating a target operation state of the motor 3, the current detection signal Si, and the rotation position detection signal Se from the rotation position detector 4 so that the motor 3 reaches the operation state designated by the drive command signal Sc. The drive command signal Sc is input from the outside. In addition, the control circuit 1 monitors the rotation state of the motor 3 by obtaining information such as a rotation speed and a torque of the rotor of the motor 3, based on the current detection signal Si and the rotation position detection signal Se.

As will be described in detail below, the control circuit 1 measures the current i flowing through the coil 31 of the motor 3, based on a mean value of the current i1 flowing through the current detection element R1 and the current i2 flowing through the current detection element R2.

The control circuit 1 is a program processing device (e.g., a microcontroller) having a configuration. In the configuration, for example, a processor such as a CPU, various storage devices such as RAM and ROM, and peripheral circuits such as a counter (timer), an A/D conversion circuit, a D/A conversion circuit, a clock generation circuit, and an input/output I/F circuit are connected to each other via a bus or a dedicated line.

Note that the motor drive control device 10 may be configured such that at least a part of the control circuit 1 and at least a part of the drive circuit 2 are packaged as a single integrated circuit device (IC), or configured such that the control circuit 1 and the drive circuit 2 are packaged as separate integrated circuit devices.

The specific configuration and operation of the control circuit 1 will be described in detail below.

As illustrated in FIG. 2, the control circuit 1 includes, for example, a drive control unit 11, a current acquisition unit 12, a rotation speed acquisition unit 13, and a position acquisition unit 14, as functional blocks for generating the drive control signal Sd.

These functional blocks are implemented, for example, in the program processing device as the control circuit 1, by the processor executing various arithmetic processing in accordance with a program stored in a memory and controlling the peripheral circuits such as the counter and the A/D conversion circuit.

The rotation speed acquisition unit 13 is a functional unit for acquiring a measurement value of the rotation speed of the rotor of the motor 3. The rotation speed acquisition unit 13 calculates a rotation speed ω of the rotor of the motor 3 based on, for example, the rotation position detection signal Se output from the rotation position detector 4.

The position acquisition unit 14 is a functional unit for acquiring a measurement value of the rotation angle of the rotor of the motor 3. The position acquisition unit 14 calculates a rotation angle (rotation position) θ of the rotor of the motor 3 based on, for example, the rotation position detection signal Se output from the rotation position detector 4.

The current acquisition unit 12 is a functional unit for acquiring a measurement value of the current of the coil 31 of the motor 3.

The current acquisition unit 12 calculates a measurement value of the current i flowing through the coil 31 of the corresponding phase, based on the current detection signal Si. A method of measuring the current i by the current acquisition unit 12 will be described below.

Note that, although the control circuit 1 includes the current acquisition unit 12 for the coil 31 of each phase (drive circuit 2) of the motor 3, only the current acquisition unit 12 for detecting the current flowing through the A-phase coil 31 is illustrated in FIG. 2.

The drive control unit 11 calculates a control amount for the motor 3, for example, by executing arithmetic processing in accordance with a vector control based on the drive command signal Sc, the current i of the coil 31 acquired by the current acquisition unit 12, the rotation speed ω of the motor 3 acquired by the rotation speed acquisition unit 13, and the rotation angle θ of the motor 3 acquired by the position acquisition unit 14, and generates the drive control signal Sd based on the calculated control amount.

For example, the drive control unit 11 includes a drive command acquisition unit 15, a position control unit 16, a speed control unit 17, a current control unit 18, and a drive control signal generation unit 19.

The drive command acquisition unit 15 acquires a value designating a target operation state of the motor 3 designated by the drive command signal Sc by receiving the drive command signal Sc and analyzing the received drive command signal Sc. The drive command signal Sc is output from, for example, a host device provided outside the motor drive control device 10 and configured to control the motor unit 100.

The drive command signal Sc includes a value indicating the target operation state of the motor 3. In the present embodiment, the drive command signal Sc is, for example, a rotation angle command signal designating the rotation angle (rotation position) of the motor 3, and includes a value of a target value (target rotation angle) θref of the rotation angle of the rotor of the motor 3. The drive command acquisition unit 15 acquires the value of the target rotation angle θref by analyzing the drive command signal Sc.

The position control unit 16 calculates a control amount based on the target rotation angle θref acquired by the drive command acquisition unit 15. Specifically, the position control unit 16 calculates a control amount corresponding to (θref - θ) between the target rotation angle θref and the rotation angle θ acquired by the position acquisition unit 14. For example, the position control unit 16 calculates a control amount of the motor 3 such that a difference (θref - θ) becomes 0 by a PI control arithmetic operation, converts the control amount into a rotation speed value, and outputs the rotation speed value as a target rotation speed ωref.

The speed control unit 17 calculates a control amount based on the target rotation speed ωref calculated by the position control unit 16. Specifically, the speed control unit 17 calculates a control amount corresponding to a difference (ωref - ω) between the target rotation speed ωref and the rotation speed ω acquired by the rotation speed acquisition unit 13. For example, the speed control unit 17 calculates a control amount of the motor 3 such that the difference (ωref - ω) becomes 0 by a PI control arithmetic operation, converts the control amount into a current (coil current) value, and outputs the current value as a target current iref.

The current control unit 18 calculates a control amount based on the target current iref calculated by the speed control unit 17. Specifically, the current control unit 18 calculates a control amount corresponding to a difference (iref - i) between the target current iref and the current i acquired by the current acquisition unit 12. For example, the current control unit 18 calculates a control amount of the motor 3 such that the difference (iref - i) becomes 0 by a PI control arithmetic operation, and outputs the control value as a voltage command value vref.

The drive control signal generation unit 19 generates the drive control signal Sd based on the voltage command value vref calculated by the current control unit 18. For example, the drive control signal generation unit 19 generates a two-phase (A-phase and B-phase) voltage signal (PWM signal) in a fixed coordinate system by performing space vector conversion based on the voltage command value vref output from the current control unit 18 and the rotation angle θ, and outputs the voltage signal as the drive control signal Sd.

Here, a method of measuring the current i flowing through the coil 31 of the motor 3 by the current acquisition unit 12 of the control circuit 1 will be described.

Note that although a method of measuring the current flowing through the A-phase coil 31 of the two-phase stepping motor will be described below, the current flowing through the B-phase coil is also measured by the same method as the method for the A-phase coil.

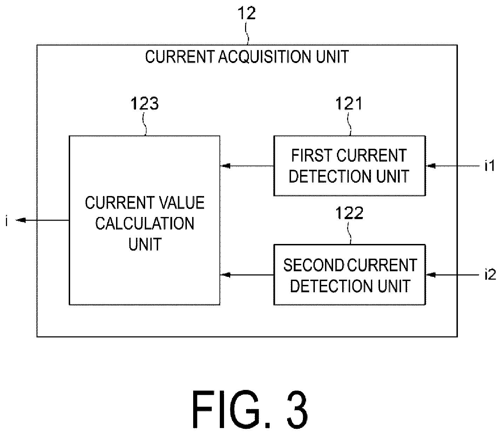

FIG. 3 is a diagram illustrating an example of an internal configuration of the current acquisition unit 12 according to the first embodiment.

The current acquisition unit 12 acquires a measurement value of the current i flowing through the coil 31, based on a mean value of the current i1 flowing through the current detection element R1 and the current i2 flowing through the current detection element R2 in the drive circuit 2.

Specifically, as illustrated in FIG. 3, the current acquisition unit 12 includes a first current detection unit 121, a second current detection unit 122, and a current value calculation unit 123. The first current detection unit 121 detects a value of the current i1 flowing through the current detection element R1. The second current detection unit 122 detects a value of the current i2 flowing through the current detection element R2. The current value calculation unit 123 calculates a mean value (e.g., an arithmetic mean value) of the value of the current i1 detected by the first current detection unit 121 and the value of the current i2 detected by the second current detection unit 122, and outputs the mean value as a measurement value of the current i of the coil 31.

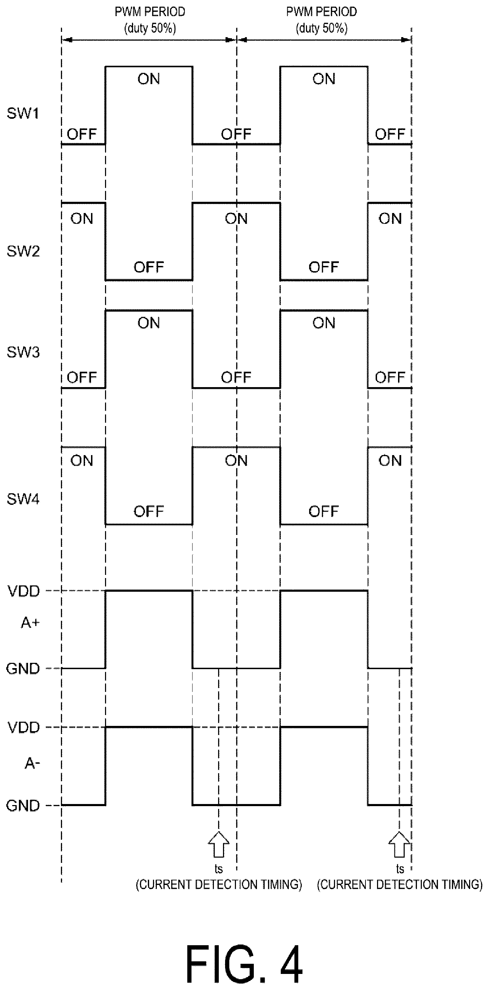

FIG. 4 is a diagram for describing a measurement timing of the current of the coil 31 by the current acquisition unit 12 according to the first embodiment.

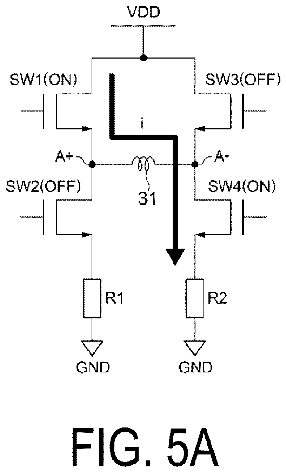

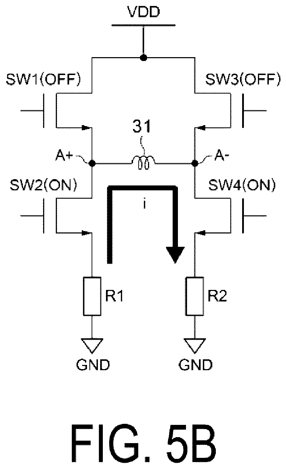

FIG. 5A and FIG. 5B are diagrams illustrating examples of energization patterns of the coil 31.

FIG. 4 illustrates, for example, the ON and OFF states of the switches SW1 to SW4 and the voltages at both ends of the coil 31, that is, the voltage at the node A+ and the voltage at the node A- when the duty ratio of the drive control signal Sd at the node A+ side (SW1 and SW2) and the node A- side (SW3 and SW4) is 50%.

Note that, as illustrated in FIG. 4, it is assumed that the duty ratio (pulse width) of the drive control signal Sd changes toward both end sides of a PWM period with reference to a midpoint of the PWM period.

FIG. 5A illustrates the ON and OFF states of the switches SW1 to SW4 and a current path when the coil 31 is excited (excitation mode). FIG. 5B illustrates the ON and OFF states of the switches SW1 to SW4 and a current path when the coil 31 is regenerated (regeneration mode).

By the drive control signal Sd, the switch SW1 and the switch SW2 are alternately turned on, and the switch SW3 and the switch SW4 are alternately turned on.

For example, when the switches SW1 and SW4 are turned on and the switches SW2 and SW3 are turned off, the coil 31 enters the excitation mode, and the current i flows from the DC power supply VDD to the ground potential GND via the switch SW1, the coil 31, and the switch SW4 as illustrated in FIG. 5A.

Then, when the switches SW1 and SW3 are turned off and the switches SW2 and SW4 are turned on after the above-described excitation mode, the coil 31 enters the regeneration mode, and the current i is regenerated from the ground potential GND to the ground potential GND via the switch SW2, the coil 31, and the switch SW4 as illustrated in FIG. 5B.

The switches SW1 to SW4 perform switching operations in accordance with the drive control signal Sd, whereby the excitation mode and the regeneration mode are repeated while the direction of the current i flowing through the coil 31 is switched.

For example, as illustrated in FIG. 4, the current i flowing through the coil 31 when the duty of the PWM period is 50% will be described. When the duty of the PWM period is 50%, the current i flowing through the coil 31 is maintained at a present current value.

When the duty of the PWM period is 50%, a period of the switches SW1 and SW3 being off and the switches SW2 and SW4 being on continues for 25% of the PWM period. During this period, the current i is regenerated from the ground potential GND to the ground potential GND via the switch SW2, the coil 31, and the switch SW4. Next, a period of the switches SW1 and SW3 being on and the switches SW2 and SW4 being off continues for 50% of the PWM period. During this period, the current i is regenerated from the DC power supply VDD to the DC power supply VDD via the switch SW3, the coil 31, and the switch SW 1. Finally, a period of the switches SW1 and SW3 being off and the switches SW2 and SW4 being on continues for 25% of the PWM period. During this period, the current i is regenerated from the ground potential GND to the ground potential GND via the switch SW2, the coil 31, and the switch SW4.

As described above, when the duty of the PWM period is 50%, the current i flowing through the coil 31 is equal for each flow direction of the current i, and thus the increase or decrease in the current amount is 0.

The current acquisition unit 12 detects the current i1 flowing through the current detection element R1 and the current i2 flowing through the current detection element R2 at a predetermined timing in one period (PWM period) of a PWM signal as the drive control signal Sd. For example, as illustrated in FIG. 4, the first current detection unit 121 samples a value of the current i1 flowing through the current detection element R1 and the second current detection unit 122 samples a value of the current i2 flowing through the current detection element R2 at a predetermined timing ts in the PWM period of the drive control signal Sd.

The current value calculation unit 123 calculates a mean value of the currents i1 and i2 sampled as described above by the first current detection unit 121 and the second current detection unit 122. Accordingly, the measurement value of the current i flowing through the coil 31 is updated for each PWM period of the drive control signal Sd.

The timing of detecting (sampling) the currents i1 and i2 is not particularly limited, but is preferably a period of the motor 3 being in the regeneration mode as illustrated in FIG. 4.

Note that the period of the motor 3 being in the regeneration mode may be not only a period of the switches SW1 and SW3 being off and the switches SW2 and SW4 being on, but also a period of the current i being regenerated to the ground potential GND via parasitic diodes of the low-side switches SW2 and SW4.

As described above, when controlling the driving of the motor 3, the motor drive control device 10 according to the first embodiment measures the currents i1 and i2 respectively flowing through the two current detection elements R1 and R2 connected in series to the two switching legs 21 and 22 constituting the H-bridge circuit as the drive circuit 2, and uses the mean value of the currents i1 and i2 as the measurement value of the current i flowing through the coil 31.

According to this, even in a case where the current flowing through the coil is not stable due to a switching noise or the like when the switching element constituting the inverter circuit is driven, the magnitude of the current flowing through the coil is appropriately measured by calculating a mean value of the currents flowing through the two resistors.

Thus, according to the motor drive control device 10 of the present embodiment, it is possible to measure the current of the coil with higher accuracy than a method of detecting a current of a coil of a motor by one resistor in the related art.

### Second Embodiment

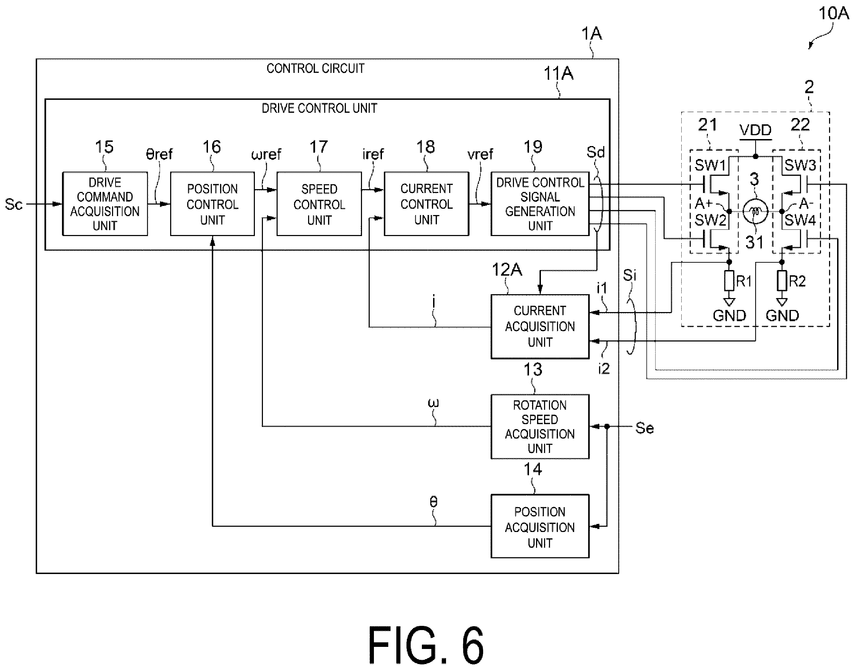

FIG. 6 is a diagram illustrating an internal configuration of the drive circuit 2 and a control circuit 1A in a motor drive control device 10A according to a second embodiment.

The control circuit 1A according to the second embodiment is different from the control circuit 1 according to the first embodiment in that the current i flowing through the coil 31 of the motor 3 is measured by detecting at least one of the currents i1 and i2 flowing through the current detection elements R1 and R2 in accordance with the duty ratio of the drive control signal Sd as a PWM signal, and is the same as the control circuit 1 according to the first embodiment in other aspects.

Specifically, when a duty ratio of the drive control signal Sd (PWM signal) is smaller than a predetermined threshold value, the control circuit 1A detects the current i1 flowing through the current detection element R1 and the current i2 flowing through the current detection element R2, and calculates a measurement value of the current i flowing through the coil 31, based on a mean value of the current i1 and the current i2. On the other hand, when a duty ratio of the drive control signal Sd is equal to or greater than the predetermined threshold value, the control circuit 1A detects the current flowing through the current detection element at a downstream side of a current path in the drive circuit 2 out of the current detection elements R1 and R2, and calculates a measurement value of the current i flowing through the coil 31, based on the detected current.

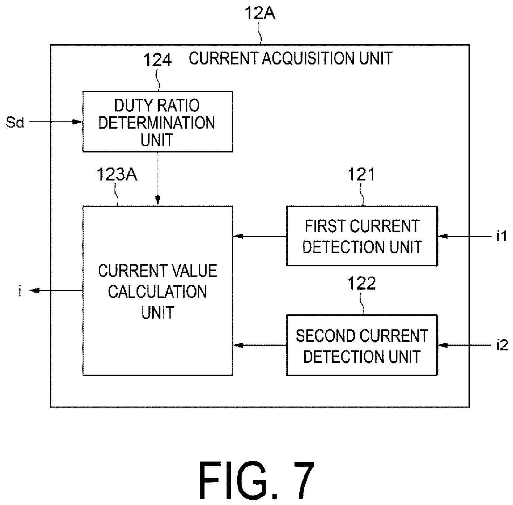

FIG. 7 is a diagram illustrating an example of an internal configuration of a current acquisition unit 12A according to the second embodiment.

As illustrated in FIG. 7, the current acquisition unit 12A includes the first current detection unit 121, the second current detection unit 122, a duty ratio determination unit 124, and a current value calculation unit 123A.

As in the first embodiment, the first current detection unit 121 and the second current detection unit 122 sample the currents i1 and i2, respectively, at a predetermined timing in a PWM period.

The duty ratio determination unit 124 measures a duty ratio of the drive control signal Sd, determines whether or not the duty ratio of the drive control signal Sd is equal to or greater than a predetermined threshold value, and outputs the determination result. Although not particularly limited, the predetermined threshold is, for example, a duty ratio of 80%.

The current value calculation unit 123A calculates a measurement value of the current i flowing through the coil 31, based on the determination result of the duty ratio determination unit 124.

Specifically, when the duty ratio determination unit 124 determines that the duty ratio of the drive control signal Sd is smaller than the predetermined value, the current value calculation unit 123A calculates a mean value of the current i1 flowing through the current detection element R1 and the current i2 flowing through the current detection element R2, and outputs the mean value as a measurement value of the current i flowing through the coil 31.

On the other hand, when the duty ratio determination unit 124 determines that the duty ratio of the drive control signal Sd is equal to or greater than the predetermined value, the current value calculation unit 123A outputs the current flowing through the current detection element at a downstream side of a current path in the drive circuit 2 out of the current detection element R1 and the current detection element R2 as a measurement value of the current i. The current detection element at the downstream side is a current detection element provided on a current path from the coil 31 to the ground potential GND when the current i flows through the coil 31 and then is regenerated to the ground potential GND in the regeneration mode.

For example, when the current i is regenerated from the ground potential GND to the ground potential GND via the current detection element R1, the switch SW2, the coil 31, the switch SW4, and the current detection element R2 as illustrated in FIG. 5B described above, the current detection element R2 out of the current detection elements R1 and R2 is at the downstream side of the current path. In this case, the current value calculation unit 123A acquires the current i2 of the current detection element R2 sampled by the second current detection unit 122, and outputs the current i2 as a measurement value of the current i.

On the other hand, when the current i is regenerated in a direction opposite to the direction in FIG. 5B, that is, when the current i is regenerated from the ground potential GND to the ground potential GND via the current detection element R2, the switch SW4, the coil 31, the switch SW2, and the current detection element R1, the current detection element R1 out of the current detection elements R1 and R2 is at the downstream side of the current path. In this case, the current value calculation unit 123A acquires the current i1 of the current detection element R1 sampled by the first current detection unit 121, and outputs the current i1 as a measurement value of the current i.

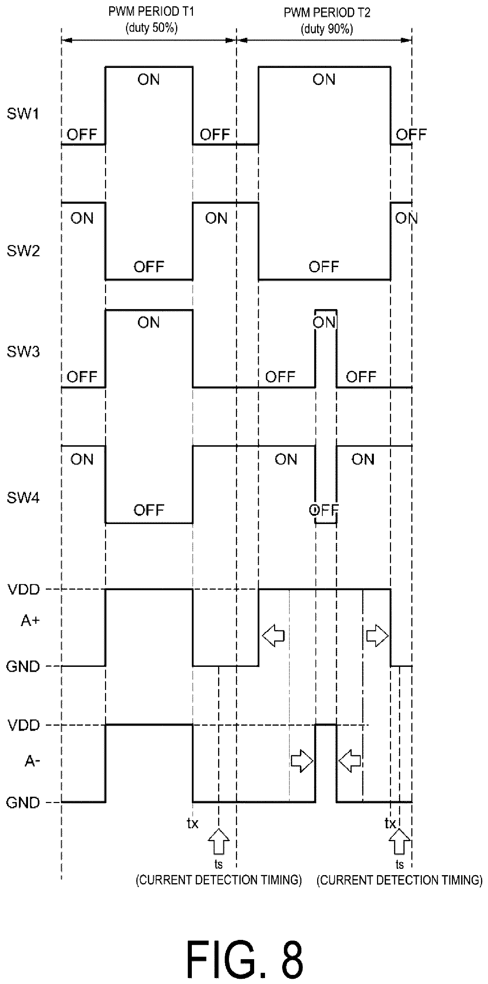

FIG. 8 is a diagram for describing a measurement timing of the current of the coil 31 by the current acquisition unit 12A according to the second embodiment.

FIG. 8 illustrates a case where the duty ratio of the drive control signal Sd at the node A+ side (SW1 and SW2) and the node A- side (SW3 and SW4) is 50% in a predetermined PWM period T1, and the duty ratio of the drive control signal Sd at the node A+ side (SW1 and SW2) is 90% and the duty ratio of the drive control signal Sd at the node A- side (SW3 and SW4) is 10% in a subsequent PWM period T2.

Note that, as in the first embodiment, it is assumed that the duty ratio (pulse width) of the drive control signal Sd changes toward both end sides of a PWM period with reference to a midpoint of the PWM period.

For example, as illustrated in FIG. 8, in the PWM period T1 where the duty ratio of the drive control signal Sd at the node A+ side (SW1 and SW2) and the node A- side (SW3 and SW4) is 50%, there is a margin in a time difference between a timing ts of detecting the currents i1 and i2 and a timing tx of switching the ON and OFF states of the switches SW1 to SW4, and thus the current i flowing through the coil 31 is less likely to be affected by the switching noises of the switches SW1 to SW4.

On the other hand, as illustrated in FIG. 8, in the PWM period T2 where the duty ratio of the drive control signal Sd at the node A+ side (SW1 and SW2) is 90% and the duty ratio of the drive control signal Sd at the node A- side (SW3 and SW4) is 10%, there is no margin in a time difference between the timing ts of detecting the currents i1 and i2 and the timing tx of switching the ON and OFF states of the switches SW1 to SW4. In other words, there is less time difference between the timing tx of switching the voltage at the node A+ side where the duty ratio of the drive control signal Sd is equal to or greater than the threshold value (e.g., 80%) and the timing ts of detecting the currents i1 and i2. As a result, the current i flowing through the coil 31 is likely to be affected by the switching noises of the switches SW1 and 2, that is, voltage fluctuations at the node A+ side.

More specifically, in the PWM period T2, the timing tx of switching the voltage of the node A+ at the upstream side of the current path of the current i and the timing ts of detecting the currents i1 and i2 are temporally close to each other. Thus, the current i1 of the current detection element R1 located at the node A+ side being the upstream side of the current path is more likely to be affected by the switching noises than the current i2 of the current detection element R2 located at the node A- side being the downstream side of the current path.

Then, as described above, when the duty ratio of the drive control signal Sd is equal to or greater than the predetermined threshold value, the control circuit 1A according to the second embodiment measures only the current flowing through the current detection element at the downstream side of the current path in the drive circuit 2 (the current i2 flowing through the current detection element R2 at the A- side in the case of the PWM period T2 in FIG. 8), and uses the measured current as a measurement value of the current i flowing through the coil 31.

According to this, the current i flowing through the coil 31 of the motor 3 can be measured with higher accuracy even in a situation where the switching noises are large due to the magnitude of the duty ratio of the drive control signal Sd as a PWM signal.

Note that, in the above-described example, the description has been made for a case where when the duty ratio of the drive control signal Sd at the node A+ side (SW1 and SW2) is 90% and the duty ratio of the drive control signal Sd at the node A- side (SW3 and SW4) is 10%, only the current i2 flowing through the current detection element R2 at the A- side being the downstream side of the current is measured and used as a measurement value of the current i flowing through the coil 31, but this is not intended for limitation.

For example, when the duty ratio of the drive control signal Sd at the node A- side (SW3 and SW4) is 90% and the duty ratio of the drive control signal Sd at the node A+ side (SW1 and SW2) is 10%, only the current i1 flowing through the current detection element **R1** at the A+ side being the downstream side of the current is measured and used as a measurement value of the current i flowing through the coil 31.

That is, when the duty ratio of one side out of the voltage at the node A+ side (the drive control signal Sd of the switches SW1 and SW2) and the voltage at the node A- side (the drive control signal Sd of the switches SW3 and SW4) is equal to or greater than the predetermined threshold value (e.g., 80%), the control circuit 1A may detect the current flowing through the current detection element at the other side (side of the node with the duty ratio less than the predetermined threshold value) and calculate a measurement value of the current i flowing through the coil 31.

### Expansion of Embodiments

For example, in the above-described embodiments, a case where the motor 3 is a stepping motor has been exemplified, but this is not intended for limitation. The motor 3 may be, for example, a three-phase brushless DC motor having U-phase, V-phase, and W-phase coils, and the type of the motor is not particularly limited.

In addition, a method of detecting a rotation angle and a rotation speed of the motor is not limited to the above-described method. For example, when the motor unit 100 is configured without rotation position detector 4 (sensorless type), the control circuit 1 may calculate the rotation angle θ and the rotation speed ω of the motor by a known arithmetic operation used for the sensorless type.

### Reference Signs List

1, 1A Control circuit; 2 Drive circuit; 3 Motor; 4 Rotation position detector (encoder); 10, 10A Motor drive control device; 11 Drive control unit; 12, 12A Current acquisition unit; 13 Rotation speed acquisition unit; 14 Position acquisition unit; 15 Drive command acquisition unit; 16 Position control unit; 17 Speed control unit; 18 Current control unit; 19 Drive control signal generation unit; 21, 22 Switching leg; 31 Coil; 100 Motor unit; 121 First current detection unit; 122 Second current detection unit; 123, 123A Current value calculation unit; 124 Duty ratio determination unit; SW1 to SW4 Switch; R1, R2 Current detection element; Se Rotation position detection signal; Si Current detection signal; Sc Drive command signal; Sd Drive control signal (PWM signal); i Current flowing through coil 31; i1 current flowing through current detection element R1; i2 Current flowing through current detection element R2.

## Claims

1. A motor drive control device (10) comprising:
a control circuit (1) configured to generate, based on a measurement value of a current (i) flowing through a coil (31) of a motor (3), a drive control signal (Sd) for driving the coil (31); and
a drive circuit (2) configured to drive the coil (31) based on the drive control signal (Sd) generated by the control circuit (1), wherein
the drive circuit (2) includes a first switch (SW1) and a second switch (SW2) connected in series, a third switch (SW3) and a fourth switch (SW4) connected in series, a first current detection element (R1) connected in series to the first switch (SW1) and the second switch (SW2), and a second current detection element (R2) connected in series to the third switch (SW3) and the fourth switch (SW4),
the coil (31) is connected between a first node with the first switch (SW1) and the second switch (SW2) connected in common, and a second node with the third switch (SW3) and the fourth switch (SW4) connected in common, and
the control circuit (1) measures the current (i) flowing through the coil (31), based on a mean value of a current (i1) flowing through the first current detection element (R1) and a current (i2) flowing through the second current detection element (R2), wherein
the drive control signal (Sd) is a PWM signal, and
the motor drive control device (10) **characterized in that**
the control circuit (1) measures:
the current (i) flowing through the coil (31), based on the mean value of the current (i1) flowing through the first current detection element (R1) and the current (i2) flowing through the second current detection element (R2), when a duty ratio of the PWM signal is smaller than a predetermined threshold value; and the current (i) flowing through the coil (31), based on a current (i1) flowing through one of the first current detection element (R1) and the second current (i2) detection element (R2) located at a downstream side of a current path in the drive circuit (1), when the duty ratio of the PWM signal is equal to or greater than the predetermined threshold value.

2. The motor drive control device (10) according to claim 1, wherein the control circuit (1) detects at least one of the current (i1) flowing through the first current detection element (R1) and the current (i2) flowing through the second current detection element (R2), at a predetermined timing in one period of the drive control signal (Sd).

## Patentansprüche

1. Motorantriebs-Steuervorrichtung (10), umfassend:
eine Steuerschaltung (1), die dazu eingerichtet ist, auf der Grundlage eines Messwertes eines Stroms (i), der durch eine Wicklung (31) eines Motors (3) fließt, ein Antriebssteuersignal (Sd) zum Antreiben der Wicklung (31) zu generieren; und
eine Ansteuerschaltung (2), die dazu eingerichtet ist, die Wicklung (31) auf der Grundlage des durch die Steuerschaltung (1) generierten Antriebssteuersignals (Sd) anzutreiben, wobei
die Ansteuerschaltung (2) einen ersten Schalter (SW1) und einen zweiten Schalter (SW2), die in Reihe geschaltet sind, einen dritten Schalter (SW3) und einen vierten Schalter (SW4), die in Reihe geschaltet sind, ein erstes Stromdetektionselement (R1), das mit dem ersten Schalter (SW1) und dem zweiten Schalter (SW2) in Reihe geschaltet ist, und ein zweites Stromdetektionselement (R2), das mit dem dritten Schalter (SW3) und dem vierten Schalter (SW4) in Reihe geschaltet ist, aufweist,
die Wicklung (31) zwischen einem ersten Knoten, wo der erste Schalter (SW1) und der zweite Schalter (SW2) gemeinsam verbunden sind, und einem zweiten Knoten, wo der dritte Schalter (SW3) und der vierte Schalter (SW4) gemeinsam verbunden sind, verbunden ist, und
die Steuerschaltung (1) den durch die Wicklung (31) fließenden Strom (i) auf der Grundlage eines Mittelwertes aus einem durch das erste Stromdetektionselement (R1) fließenden Strom (i1) und einem durch das zweite Stromdetektionselement (R2) fließenden Strom (i2) misst, wobei
das Antriebssteuersignal (Sd) ein PWM-Signal ist, und
die Motorantriebs-Steuervorrichtung (10) **dadurch gekennzeichnet ist, dass**
die Steuerschaltung (1) misst:
den durch die Wicklung (31) fließenden Strom (i) auf der Grundlage des Mittelwertes aus dem durch das erste Stromdetektionselement (R1) fließenden Strom (i1) und dem durch das zweite Stromdetektionselement (R2) fließenden Strom (i2), wenn ein Tastverhältnis des PWM-Signals kleiner als ein zuvor festgelegter Schwellenwert ist; und den durch die Wicklung (31) fließenden Strom (i) auf der Grundlage eines Stroms (i1), der durch eines des ersten Stromdetektionselements (R1) und des zweiten Strom (i2)-Detektionselements (R2), das sich auf einer stromabwärtigen Seite eines Strompfades in der Ansteuerschaltung (1) befindet, fließt, wenn das Tastverhältnis des PWM-Signals gleich dem zuvor festgelegten Schwellenwert oder größer als dieser ist.

2. Motorantriebs-Steuervorrichtung (10) nach Anspruch 1, wobei die Steuerschaltung (1) mindestens einen des durch das erste Stromdetektionselement (R1) fließenden Stroms (i1) und des durch das zweite Stromdetektionselement (R2) fließenden Stroms (i2) an einem zuvor festgelegten Zeitpunkt in einer einzelnen Periode des Antriebssteuersignals (Sd) detektiert.

## Revendications

1. Dispositif de commande d'entraînement de moteur (10) comprenant :
un circuit de commande (1) configuré pour générer, en fonction d'une valeur de mesure d'un courant (i) circulant à travers une bobine (31) d'un moteur (3), un signal de commande d'entraînement (Sd) pour entraîner la bobine (31) ; et
un circuit d'entraînement (2) configuré pour entraîner la bobine (31) en fonction du signal de commande d'entraînement (Sd) généré par le circuit de commande (1), dans lequel
le circuit d'entraînement (2) inclut un premier commutateur (SW1) et un deuxième commutateur (SW2) connectés en série, un troisième commutateur (SW3) et un quatrième commutateur (SW4) connectés en série, un premier élément de détection de courant (R1) connecté en série au premier commutateur (SW1) et au deuxième commutateur (SW2), et un deuxième élément de détection de courant (R2) connecté en série au troisième commutateur (SW3) et au quatrième commutateur (SW4),
la bobine (31) est connectée entre un premier nœud avec le premier commutateur (SW1) et le deuxième commutateur (SW2) connectés en commun, et un deuxième nœud avec le troisième commutateur (SW3) et le quatrième commutateur (SW4) connectés en commun, et
le circuit de commande (1) mesure le courant (i) circulant à travers la bobine (31), en fonction d'une valeur moyenne d'un courant (i1) circulant à travers le premier élément de détection de courant (R1) et un courant (i2) circulant à travers le deuxième élément de détection de courant (R2), dans lequel
le signal de commande d'entraînement (Sd) est un signal à modulation de largeur d'impulsion, et
le dispositif de commande d'entraînement de moteur (10) **caractérisé en ce que**
le circuit de commande (1) mesure :
le courant (i) circulant à travers la bobine (31), en fonction de la valeur moyenne du courant (i1) circulant à travers le premier élément de détection de courant (R1) et le courant (i2) circulant à travers le deuxième élément de détection de courant (R2), lorsqu'un rapport cyclique du signal à modulation de largeur d'impulsion est plus petit qu'une valeur seuil prédéterminée ; et le courant (i) circulant à travers la bobine (31), en fonction d'un courant (i1) circulant à travers l'un du premier élément de détection (R1) de courant et du deuxième élément de détection (R2) de courant (i2) situé au niveau d'un côté aval d'un trajet de courant dans le circuit d'entraînement (1), lorsque le rapport cyclique du signal à modulation de largeur d'impulsion est égal ou supérieur à la valeur seuil prédéterminée.

2. Dispositif de commande d'entraînement de moteur (10) selon la revendication 1, dans lequel le circuit de commande (1) détecte au moins l'un du courant (i1) circulant à travers le premier élément de détection de courant (R1) et un courant (i2) circulant à travers le deuxième élément de détection de courant (R2), à un moment prédéterminé dans une période du signal de commande d'entraînement (Sd).
